# EUROPEAN PATENT SPECIFICATION

(11) **EP 1 820 682 B1**
(45) Date of publication and mention of the grant of the patent: **26.08.2009**
(21) Application number: 07003224.8
(22) Date of filing: 15.02.2007
(51) Int. Cl.: B60K 6/40

(54) **Straddle-type vehicle**
Grätschsitz-Fahrzeug
Véhicule de type chariot

(30) Priority: 15.02.2006 JP 2006038558
(43) Date of publication of application: 22.08.2007
(73) Proprietor: Yamaha Hatsudoki Kabushiki Kaisha, Iwata-shi, Shizuoka-ken 438-8501 (JP)
(72) Inventor: Masuda, Tatsuyuki, c/o Yamaha Hatsudoki K. K., Iwata-shi, Shizuoka-ken 438-8501 (JP); Fukudome, Toshinori, c/o Yamaha Hatsudoki K. K., Iwata-shi, Shizuoka-ken 438-8501 (JP); Sasamoto, Shinji, c/o Yamaha Hatsudoki K. K., Iwata-shi, Shizuoka-ken 438-8501 (JP)
(74) Representative: Grünecker, Kinkeldey, Stockmair & Schwanhäusser Anwaltssozietät

(56) References cited:
- EP-A- 1 518 737
- EP-A- 1 574 379
- EP-A- 1 702 781
- EP-A2- 1 270 302
- WO-A-20/04054836
- JP-A- 8 175 474
- US-A- 6 155 366

## Description

The present invention relates to a straddle-type vehicle, In particular to a hybrid motorcycle, which is driven by an engine and a motor to run.

While conventional, mobile vehicles generally run rotating a wheel or wheels by drive of an engine, hybrid vehicles (see, for example, Patent Document 1) have been developed mounting thereon a drive motor In addition to an engine from the viewpoint of an environment in recent years. Such a hybrid vehicle comprises an engine having an output shaft, a drive shaft, to which power output from the engine is transmitted through a power regulator, a generator having a rotating shaft, and a switching mechanism, which switches and joins the rotating shaft of the generator to the output shaft and the drive shaft. The engine, the generator, the switching mechanism, and the motor are arranged in series on the same axis In a vehicle width direction.
Patent Document 1: JP-A-2000-343964

Since conventional hybrid vehicles described above are four-wheelers having a large vehicle width, however, the engine, the generator, the switching mechanism, and the motor can be arranged in the vehicle width direction but such a hybrid-type drive unit cannot be provided on a motorcycle having a small vehicle width. Also, when the hybrid-type drive unit is provided on the motorcycle, the drive unit projects considerably in a vehicle width direction.

EP-A-1574379 according to the preamble of claim 1 discloses a straddle-type vehicle Including a hybrid-type drive unit. Said drive unit comprises an engine arranged with a crank shaft directed In a vehicle width direction, a generator to generate electrical power, a drive motor driven by electrical power, and a power distributing device distributing a drive force generated by the engine, to drive the rear wheel through a reduction device and to actuate the generator to generate electrical power.

EP-A-1702781, a document under Article 54(3) describes a straddle-type vehicle having a hybrid-type drive unit. Said drive unit comprises an engine arranged with a crank shaft directed in a vehicle width direction, a generator to generate electrical power, a drive motor driven by electrical power, a power distributing device distributing a drive force, which is generated by the engine to drive the rear wheel through a reduction device. The power distributing device, the generator and the motor are aligned on an axis rearwardly separate from and in parallel to the crankshaft of the engine.

The invention has been thought of in order to cope with the problem described above and has its object to provide a straddle-type vehicle, in particular a hybrid motorcycle capable of mounting thereon a hybrid-type drive unit, which does not project in a vehicle width direction and can be mounted even on a motorcycle having a limited vehicle width.

This objective is solved according to the present invention by a straddle-type vehicle having a hybrid-type drive unit, said drive unit comprising an engine arranged with a crank shaft directed in a vehicle width direction, a generator to generate electrical power, a drive motor driven by electrical power, a power distributing device distributing a drive force, which is generated by the engine, to drive the rear wheel through a reduction device, and to actuate the generator to generate electrical power, wherein the power distributing device, the generator, and the motor are aligned on an axis rearwardly separate from and in parallel to the crank shaft of the engine and wherein the drive force is transmitted from the power distributing device to the reduction device by a chain disposed in a portion between the generator and the motor in a vehicle width direction.

Preferably, the power distributing device is positional between the generator and the motor.

Further, preferably the reduction device is arranged rearwardly of the power distributing device.

According to a preferred embodiment, the straddle-type vehicle further comprises a reduction device storage casing, which receives therein the reduction device.

According to another preferred embodiment, the straddle-type vehicle further comprises a drive-wheel transmission device, wherein a front end of the drive-wheel transmission device is joumaled on the reduction device storage casing, so that a rear end side of the drive wheel transmission device is made vertically swingable, and the drive wheel is joumaled on the rear end of the drive-wheel transmission device.

Preferably, the power distributing device comprises a sun gear connected coaxially to a rotor shaft of the generator, a plurality of planetary gears arranged around the sun gear to mesh with the sun gear, a planetary carrier, which supports the planetary gears rotatably, and a ring gear arranged around the planetary gears to mesh with the planetary gears and provided rotatably about a carrier shaft provided on the planetary carrier to transmit torque of the carrier shaft to the reduction device.

Further, preferably at least one of a motor shaft provided on the motor and the rotor shaft of the generator and the sun gear are formed to be hollow, and the carrier shaft of the planetary carrier is arranged rotatably in the respectively hollow ones.

Still further, preferably the carrier shaft is projected from a shaft end of the motor shaft or the rotor shaft, both of which are formed to be hollow, and rotation of the crank shaft is transmitted through a drive force transmission mechanism to a projected end of the carrier shaft.

Yet further still, preferably a power distributing device storage casing, which receives therein the power distributing device, and the reduction device storage casing are formed integrally.

Preferably, a crank case, which journals the crank shaft, the power distributing device storage casing, and the reduction device storage casing are formed integrally.

Further, preferably the front end of the drive-wheel transmission device is formed to be bifurcate and respective ends of the bifurcate portion are joumaled on both left and right sides of the reduction device storage casing.

In order to cope with the problem, a constructional feature of a hybrid motorcycle according to the embodiment resides in a hybrid motorcycle comprising an engine arranged with a crank shaft directed in a vehicle width direction, a generator, which generates electric power upon rotation of the crank shaft of the engine, a motor driven by electric power generated by the generator to rotate a drive wheel through a reduction device and a drive-wheel transmission device, and a power distributing device, by which a rotating drive force of the crank shaft generated by the engine is distributed to the generator and the reduction device, and wherein the generator, the motor, and the power distributing device are arranged on an axis rearwardly separate from and in parallel to the crank shaft in a state, in which the power distributing device is positioned between the generator and the motor, the reduction device is arranged rearwardly of the power distributing device, and a front end of the drive-wheel transmission device is joumaled on a reduction device storage casing, which receives therein the reduction device, so that a rear end side of the drive-wheel transmission device is made vertically swingable, and the drive wheel is joumaled on the rear end of the drive-wheel transmission device.

With the hybrid motorcycle, according to the embodiment, constructed in this manner, the power distributing device is positioned between the generator and the motor, the reduction device is arranged rearwardly of the power distributing device, and a front end of the drive-wheel transmission device is joumaled on the reduction device storage casing, which receives therein the reduction device. Therefore, the drive-wheel transmission device can be made as close to a center of a vehicle width as possible, so that it is possible to constitute a vehicle width portion of the hybrid motorcycle in a compact manner. Also, since the reduction device storage casing, which receives therein the reduction device, is made use of as a member on a side of a vehicle body, which journals the drive-wheel transmission device, any specific journal member to journal the drive-wheel transmission device is made unnecessary.

Further, since the drive-wheel transmission device is mounted to a vehicle body side through the reduction device storage casing, both a construction, by which a drive force is transmitted to the drive-wheel transmission device from the reduction device, and a construction, by which the drive-wheel transmission device is joumaled on the reduction device, can be made simple. Also, since the reduction device storage casing is originally structured to be high in stiffness and strength, the drive-wheel transmission device can be firmly joumaled by journaling the drive-wheel transmission device on the reduction device storage casing.

Also, a further constructional feature of a hybrid motorcycle according to the embodiment resides in that the power distributing device comprises a sun gear connected coaxially to a rotor shaft of the generator, a plurality of planetary gears arranged around the sun gear to mesh with the sun gear, a planetary carrier, which supports the planetary gears rotatably, and a ring gear arranged around the planetary gears to mesh with the planetary gears and provided rotatably about a carrier shaft provided on the planetary carrier to transmit torque of the carrier shaft to the reduction device.

Also, in this case, at least one of a motor shaft provided on the motor and the rotor shaft of the generator and the sun gear are formed to be hollow, and the carrier shaft of the planetary carrier can be arranged rotatably in the hollows. In this manner, a portion of the hybrid motorcycle in the vehicle width direction can be structured in a further compact manner by adopting that planetary gear mechanism, which comprises the sun gear, the planetary gears, the planetary carrier, and the ring gear, as the power distributing device, forming at least one of the motor shaft and the rotor shaft of the generator and the sun gear to make the same hollow, and arranging the carrier shaft in the hollows.

Also, a still further, constructional feature of a hybrid motorcycle according to the embodiment resides in that the carrier shaft is projected from a shaft end of the motor shaft or the rotor shaft, both of which are formed to be hollow, and rotation of the crank shaft is transmitted through a drive force transmission mechanism to a projected end of the carrier shaft. Thereby, a construction, by which torque of the crank shaft is transmitted to the carrier shaft, can be simplified and connection thereof is made easy.

Also, a still further, constructional feature of a hybrid motorcycle according to the embodiment resides in that a power distributing device storage casing, which receives therein the power distributing device, and the reduction device storage casing are formed integrally. Thereby, it is possible to further firmly journal the drive-wheel transmission device on a body side of a vehicle body.

Also, a still further, constructional feature of a hybrid motorcycle according to the embodiment resides in that a crank case, which journals the crank shaft, the power distributing device storage casing, and the reduction device storage casing are formed integrally. Thereby, it is possible to make a body side of a vehicle body firm. Also, it is possible to further firmly journal the drive-wheel transmission device on a body side of a vehicle body.

Also, a still further, constructional feature of a hybrid motorcycle according to the embodiment resides in that the front end of the drive-wheel transmission device is formed to be bifurcate and respective ends of the bifurcate portion are journaled on both left and right sides of the reduction device storage casing. Thereby, it is possible to further firmly journal the drive-wheel transmission device on a body side of a vehicle body. Also, the drive-wheel transmission device can be mounted to the reduction device storage casing in a well-balanced manner.

The description above discloses (amongst others), according to a first preferred aspect, an embodiment of a hybrid motorcycle comprising an engine arranged with a crank shaft directed in a in a vehicle width direction, a generator, which generates electric power upon rotation of the crank shaft of the engine, a motor driven by electric power generated by the generator to rotate a drive wheel through a reduction device and a drive-wheel transmission device, and a power distributing device, by which a rotating drive force of the crank shaft generated by the engine is distributed to the generator and the reduction device, and wherein the generator, the motor, and the power distributing device are arranged on an axis rearwardly separate from and in parallel to the crank shaft in a state, in which the power distributing device is positioned between the generator and the motor, the reduction device is arranged rearwardly of the power distributing device, and a front end of the drive-wheel transmission device is journaled on a reduction device storage casing, which receives therein the reduction device, so that a rear end side of the drive-wheel transmission device is made vertically swingable, and the drive wheel is journaled on the rear end of the drive-wheel transmission device.

Further, according to a second preferred aspect, the power distributing device comprises a sun gear connected coaxially to a rotor shaft of the generator, a plurality of planetary gears arranged around the sun gear to mesh with the sun gear, a planetary carrier, which supports the planetary gears rotatably, and a ring gear arranged around the planetary gears to mesh with the planetary gears and provided rotatably about a carrier shaft provided on the planetary carrier to transmit torque of the carrier shaft to the reduction device.

Further, according to a third preferred aspect, at least one of a motor shaft provided on the motor and the rotor shaft of the generator and the sun gear are formed to be hollow, and the carrier shaft of the planetary carrier is arranged rotatably in the hollows.

Further, according to a fourth preferred aspect, the carrier shaft is projected from a shaft end of the motor shaft or the rotor shaft, both of which are formed to be hollow, and rotation of the crank shaft is transmitted through a drive force transmission mechanism to a projected end of the carrier shaft.

Further, according to a fifth preferred aspect, a power distributing device storage casing, which receives therein the power distributing device, and the reduction device storage casing are formed integrally.

Further, according to a sixth preferred aspect, a crank case, which journals the crank shaft, the power distributing device storage casing, and the reduction device storage casing are formed integrally.

Further, according to a seventh preferred aspect, the front end of the drive-wheel transmission device is formed to be bifurcate and respective ends of the bifurcate portion are journaled on both left and right sides of the reduction device storage casing.

In the following, the present invention is explained in greater detail with respect to several embodiments thereof in conjunction with the accompanying drawings, wherein:
Fig. 1 is a side view showing a hybrid motorcycle according to an embodiment,
Fig. 2 is a cross sectional view showing a drive unit provided on the hybrid motorcycle,
Fig. 3 is a cross sectional view showing the relationship of connection between a crank shaft and a carrier shaft,
Fig. 4 is a cross sectional view showing an arrangement of a generator, a power distributing device, and a motor,
Fig. 5 is an exploded, perspective view showing a planetary gear mechanism,
Fig. 6 is a perspective view showing a state, in which a ring gear is assembled to the planetary gear mechanism,
Fig. 7 is an exploded, perspective view showing the motor and the ring gear,
Fig. 8 is a cross sectional view showing a reduction device,
Fig. 9 is a cross sectional view showing a drive-wheel transmission device,
Fig. 10 is a side view showing a left side casing of a central storage casing,
Fig. 11 is a side view showing the central storage casing,
Fig. 12 is a side view showing a state, in which a closure member is mounted to a cooling water channel of the central storage casing shown in Fig. 11,
Fig. 13 is a side view showing a state, in which an intermediate gear portion is mounted to the central storage casing through a journal member, and
Fig. 14 is a side view showing a state, in which a right side cover portion is mounted to the intermediate storage casing.

### Description of Reference Numerals and Signs;

10: hybrid motorcycle, 11 b: rear wheel, 20: engine, 24: crank shaft, 25: crank gear, 26: intermediate gear portion, 27: connection gear, 30: power distributing device, 31: carrier shaft, 32: planetary carrier, 33a, 33b, 33c, 33d: planetary gear, 34: sun gear, 34a: sun gear portion, 34b: sun gear shaft, 35: ring gear, 35a: gear portion, 37: sprocket, 36: chain, 40: generator, 41: rotor shaft, 50: motor, 52: motor shaft, 60: reduction device, 70: drive-wheel transmission device, 80: central storage casing, 81: left side casing, 82: right side casing.

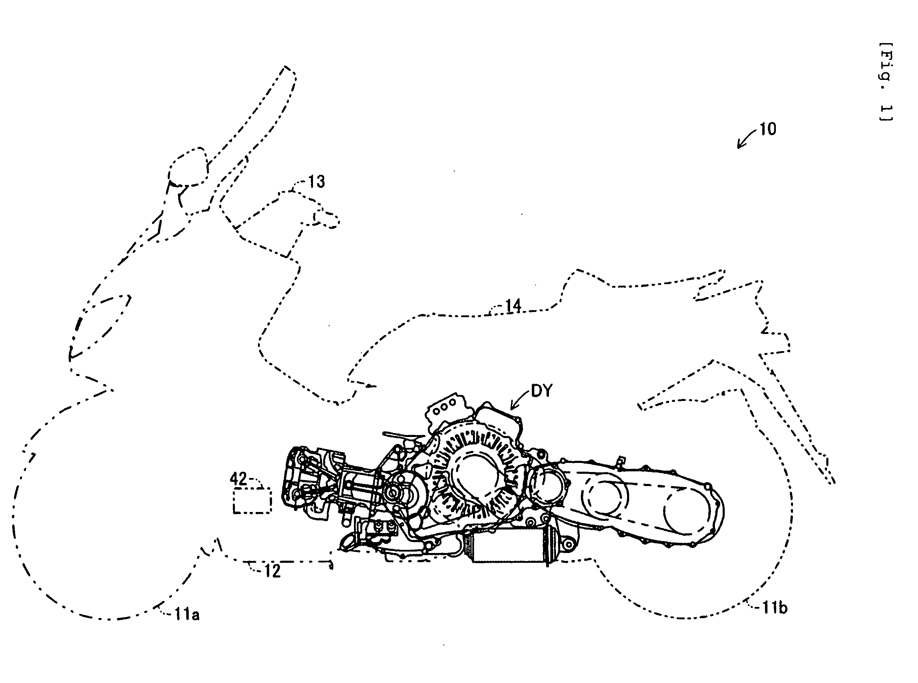

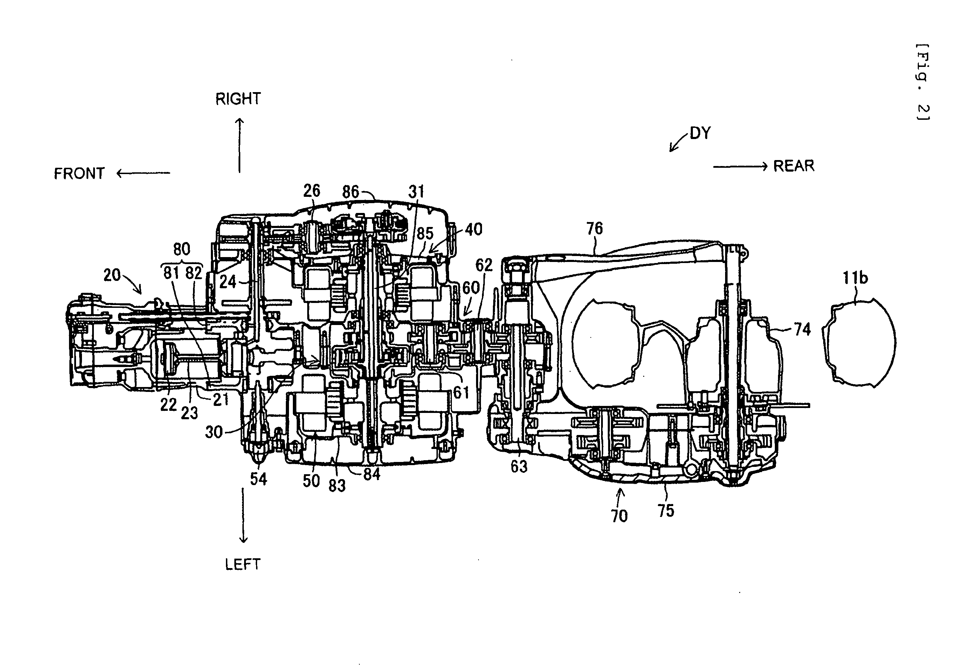

Embodiment of a hybrid motorcycle will be described below in detail with reference to the drawings. Fig. 1 shows a hybrid motorcycle 10 according to the embodiment and Fig. 2 shows a hybrid type drive unit DY, which constitutes part of the motorcycle. The hybrid motorcycle 10 comprises a front wheel 11 a and a rear wheel 11 b, and the drive unit DY is arranged below a center of a vehicle body 12 formed between the front wheel 11 a and the rear wheel 11 b. Also, a handle 13 provided with an accelerator grip and a brake lever (not shown) is provided on a front, upper portion of the vehicle body 12 and a seat 14 is provided above the center of the vehicle body 12.

The drive unit DY comprises an engine 20, a power distributing device 30, a generator 40, and a motor 50, and the hybrid motorcycle 10 comprises a series-parallel hybrid type motorcycle, in which the engine 20 and the motor 50, which serve as a power source, individually or in combination drive the rear wheel 11 b being a drive wheel. That is, the hybrid motorcycle 10 has the power distributing device 30 dividing a drive force, which is generated by the engine 20, to directly drive the rear wheel 11 b on one hand and to actuate the generator 40 on the other hand to generate electric power. Electric power generated by the generator 40 actuates the motor 50 to drive the rear wheel 11 b. In this case, a ratio of a drive force divided by the power distributing device 30 is appropriately controlled according to a running state of the hybrid motorcycle 10.

Also, as shown in Fig. 2, the power distributing device 30, the generator 40, and the motor 50 are aligned rearwardly of the engine 20 in a vehicle width direction such that the generator 40, the power distributing device 30, and the motor 50 are arranged in this order from the right side (the right side as seen from a driver seated on the seat 14 and left and right and front and rear directions are described hereinbelow as directions as seen from a driver). The engine 20 comprises a water-cooling type single cylinder engine and is accommodated inside a cylinder 21 in a state, in which a piston 22 can reciprocate in a fore-and-aft direction. Reciprocating movements of the piston 22 are transmitted through a connecting rod 23 to a crank shaft 24, which is arranged with an axial direction thereof oriented in the vehicle width direction, to rotate the crank shaft 24 about a central axis.

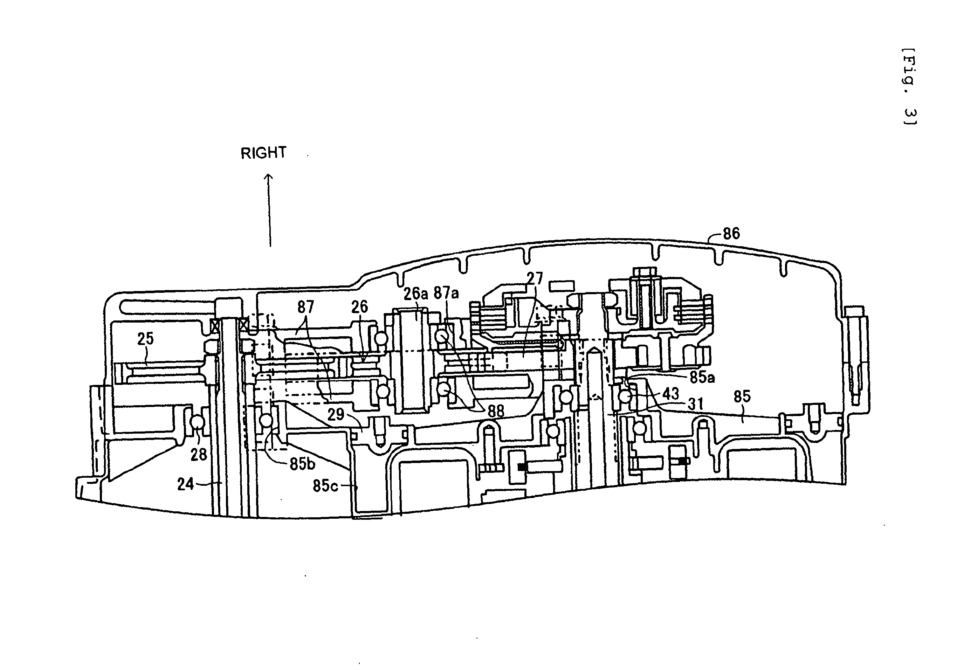

Also, when the crank shaft 24 is rotated at the time of stoppage of the engine 20, the piston 22 reciprocates backward and forward in the cylinder 21 to enable starting the engine 20. Also, the crank shaft 24 extends toward the right in the vehicle width direction from behind the engine 20 and is provided on a right end thereof with a crank gear 25, which is formed on a peripheral surface thereof with teeth as shown in Fig. 3, and a forwardly positioned portion of an intermediate gear portion 26, which is formed on a peripheral surface thereof with teeth, meshes with a rear side of the crank gear 25. A rearwardly positioned portion of the intermediate gear portion 26 meshes with a forwardly positioned portion of a connection gear 27 provided on an end-side peripheral surface of a carrier shaft 31 provided on the power distributing device 30 and formed on a peripheral surface thereof with teeth.

Accordingly, when the engine 20 is actuated to rotate the crank shaft 24, a rotating drive force of the crank shaft 24 is transmitted to the carrier shaft 31 through the crank gear 25, the intermediate gear portion 26, and the connection gear 27, so that the carrier shaft 31 rotates. The intermediate gear portion 26 cooperates with the crank gear 25 and the connection gear 27 to constitute a drive force transmission mechanism of the embodiment that takes out power generated in the engine 20 from the crank shaft 24 to transmit the same to the power distributing device 30.

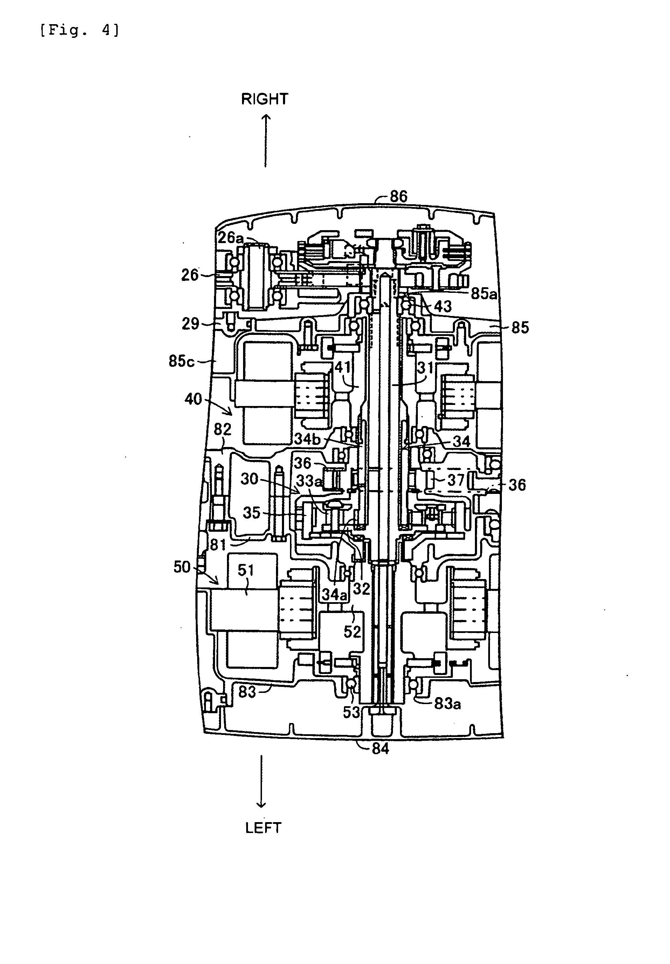

Also, as shown in Fig. 4, the carrier shaft 31 is arranged rearwardly of and in parallel to the crank shaft 24. Also, a shaft portion 26a of the intermediate gear portion 26 is also arranged in parallel to the crank shaft 24 and the carrier shaft 31. Respective members, which constitute the power distributing device 30, except the carrier shaft 31 are arranged on a left end of the carrier shaft 31, the generator 40 is arranged on the right, and the motor 50 is arranged on the left.

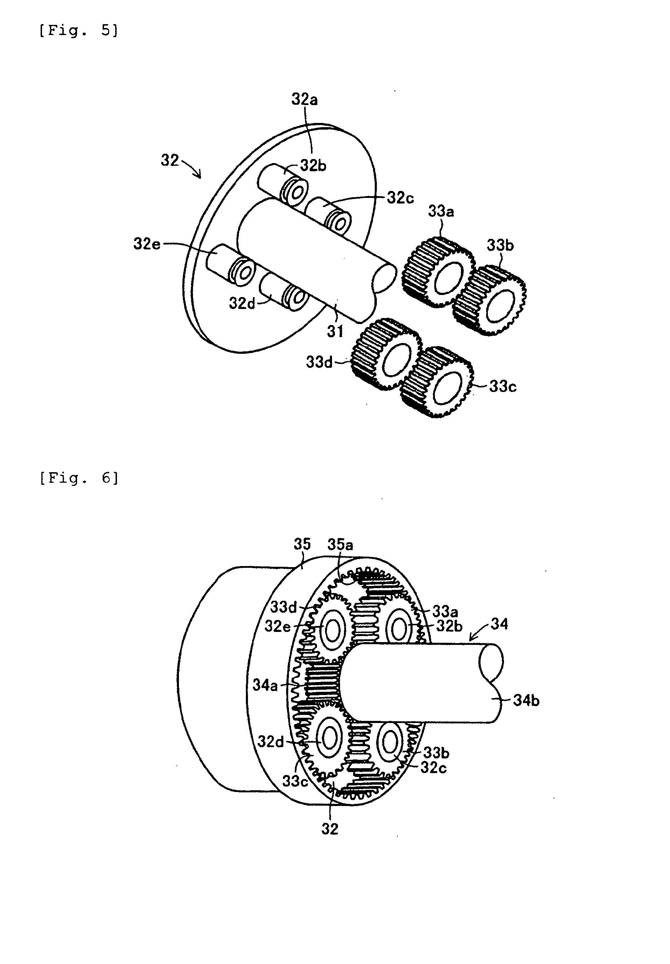

The power distributing device 30 disposed on the left end side of the carrier shaft 31 comprises a planetary gear mechanism. That is, the planetary gear mechanism comprises a planetary carrier 32 formed on an outer peripheral surface of the carrier shaft 31, four cylindrical-shaped planetary gears 33a, 33b, 33c, 33d (see Fig. 5), which are formed on peripheral surfaces thereof with teeth, a sun gear 34, and a ring gear 35. In addition, the planetary gears may be three or five in number to be arranged uniformly in a circumferential direction. The planetary carrier 32 comprises a flange-shaped body 32a formed integral with the carrier shaft 31 on the outer peripheral surface of the carrier shaft 31, planetary pins 32b, 32c, 32d, 32e formed at predetermined intervals on a concentric circle, a central axis of which is a center of the carrier shaft 31, and being the same in number as the planetary gears.

The planetary gears 33a, 33b, 33c, 33d, respectively, are mounted rotatably to the planetary pins 32b, 32c, 32d, 32e. Also, the sun gear 34 comprises a cylindrical-shaped shaft body mounted to the peripheral surface of the carrier shaft 31 to be rotatable relative to the carrier shaft 31 and is provided to extend from a portion of the peripheral surface of the carrier shaft 31 opposed the planetary gears 33a, 33b, 33c, 33d to a portion thereof corresponding to a left portion of the generator 40. A sun gear portion 34a (see Fig. 6) meshing with the planetary gears 33a, 33b, 33c, 33d is formed on that portion of the peripheral surface of the sun gear 34, which is opposed to the planetary gears 33a, 33b, 33c, 33d, and a right end of the sun gear 34 meshes in spline structure with a left end of a rotor shaft 41 of the generator 40.

Accordingly, the planetary gears 33a, 33b, 33c, 33d together with the planetary carrier 32 revolve round the sun gear portion 34a while rotating about the planetary pins 32b, 32c, 32d, 32e. The ring gear 35 is formed in a manner to cover the gear portion of the sun gear 34, the planetary carrier 32, and the planetary gears 33a, 33b, 33c, 33d and formed on an inner peripheral surface thereof with a gear portion 35a, which meshes with the planetary gears 33a, 33b, 33c, 33d.

In addition, Fig. 6 does not show the whole of the ring gear 35 but only a left side portion thereof. Also, a sprocket 37 is formed on a side portion of the generator 40 on an outer peripheral surface of the ring gear 35 and a chain 36 is trained round the sprocket 37. The chain 36 is extended toward a first reduction gear portion 61 of a reduction device 60 described later. Therefore, a rotating drive force transmitted to the carrier shaft 31 is transmitted to the reduction device 60 through the planetary gears 33a, 33b, 33c, 33d, the ring gear 35, and the chain 36.

The generator 40 is arranged on an outer peripheral side of the carrier shaft 31 in a state, in which the rotor shaft 41 is made coaxial with the carrier shaft 31 to be rotatable, and the left end of the rotor shaft 41 meshes in spline structure with a right end of a sun gear shaft 34b. Therefore, when the sun gear 34 rotates, its rotating drive force is transmitted to the rotor shaft 41, so that the rotor shaft 41 rotates. The generator 40 is actuated upon rotation of the rotor shaft 41 to generate electric power, the generated electric power being supplied to a battery 42 (see Fig. 1) and the motor 50. Also, conversely, when electric power is supplied to the generator 40, the rotor shaft 41 of the generator 40 rotates to also enable rotating the sun gear 34. In addition, the battery 42 is electrically connected to the generator 40 and the motor 50 to supply electric power to the motor 50 to actuate the motor 50 and to accumulate electric power generated by the motor 50 and the generator 40.

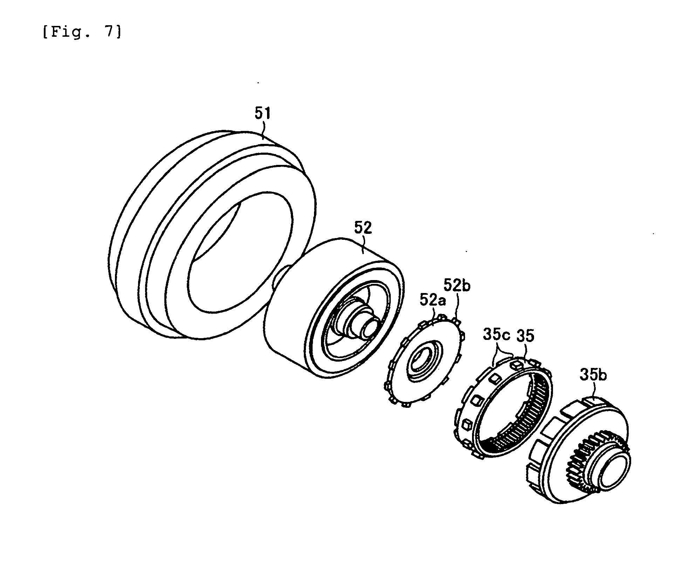

The motor 50 comprises, as shown in Fig. 7, a stator 51, which is formed to be substantially ring-shaped, and a motor shaft 52 provided inside the stator 51. A disk 52a provided with pawls 52b meshes in spline structure with a right end of the motor shaft 52. Also, a plurality of engagement recesses 35c engageable with the pawls 52b are formed on a left side of the ring gear 35 and the ring gear 35 and the motor shaft 52 are joined by engaging the engagement recesses 35c and the pawls 52b with each other.

Therefore, when the motor shaft 52 rotates, the ring gear 35 also rotates about the carrier shaft 31 on the outer peripheral side of the carrier shaft 31. Also, as described above, the sprocket 37 is formed on a right partial, peripheral surface of the ring gear 35 and the chain 36 connected to a side of the reduction device 60 is trained round the sprocket 37. Therefore, when electric power is supplied from the battery 42 to drive the motor 50, the drive force is transmitted to the reduction device 60 through the sprocket 37 of the ring gear 35, which is rotated as the motor shaft 52 rotates, and the chain 36. Also, the motor 50 has a function to regenerate electric power and generate a resistance force to inhibit rotation of the rear wheel 11 b when the motor shaft 52 is caused by torque of the rear wheel 11 b to rotate at the time of speed reduction and braking of the hybrid motorcycle 10.

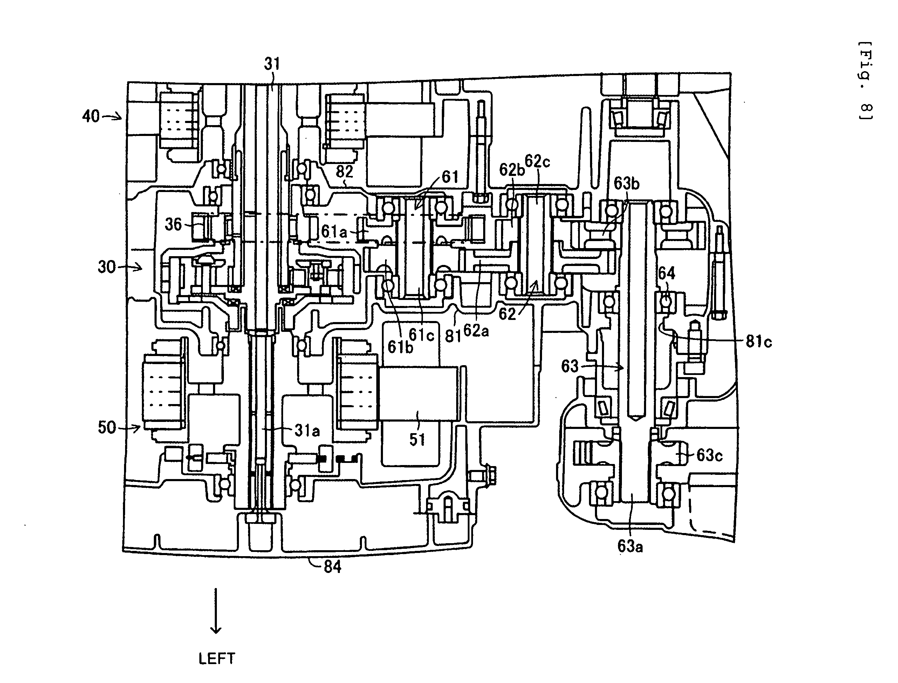

As shown in Fig. 8, the reduction device 60 comprises a second reduction gear portion 62 and a third reduction gear portion 63 as well as the first reduction gear portion 61, and the first reduction gear portion 61 comprises a sprocket portion 61 a, which meshes with the chain 36, a gear portion 61 b aligned and arranged coaxial with the sprocket portion 61a, and a shaft portion 61c, which supports the sprocket portion 61a and the gear portion 61 b. The first reduction gear portion 61 transmits a rotating drive force of the ring gear 35, which is transmitted to the sprocket portion 61 a through the chain 36, to the second reduction gear portion 62.

The second reduction gear portion 62 comprises a gear portion 62a, which meshes with the gear portion 61 b of the first reduction gear portion 61, a gear portion 62b aligned and arranged coaxial with the gear portion 62a, and a shaft portion 62c, which supports the gear portion 62a and the gear portion 62b. The second reduction gear portion 62 transmits a rotating drive force, which is transmitted from the first reduction gear portion 61 through the gear portion 62a, to the third reduction gear portion 63.

The third reduction gear portion 63 comprises a shaft portion 63a, which is set to be larger in axial length than the shaft portion 61 c of the first reduction gear portion 61 and the shaft portion 62c of the second reduction gear portion 62, a gear portion 63b, which meshes with the gear portion 62b of the second reduction gear portion 62, and a sprocket 63c arranged on a left end side of the shaft portion 63a to be coaxial with the gear portion 63b. The shaft portions 61 c, 62c, 63a are arranged in parallel in the fore-and-aft direction and the shaft portion 63a is arranged in a state, in which a position of a right end thereof in the vehicle width direction corresponds positions of right ends of the shaft portions 61 c, 62c in the vehicle width direction and a left end thereof is extended on the left in the vehicle width direction.

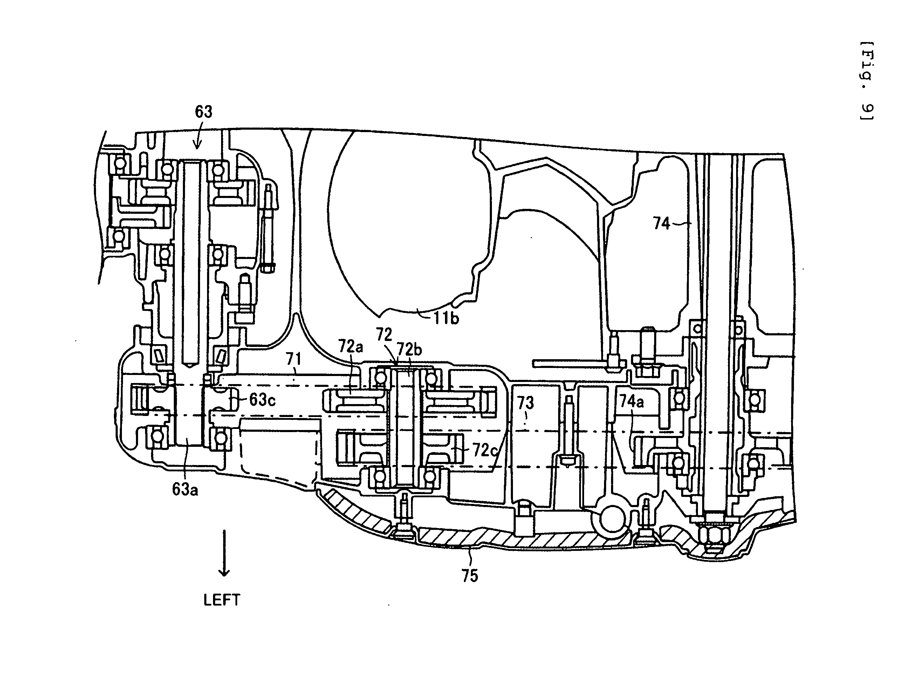

As shown in Fig. 9, a chain 71 extended rearward is trained round the sprocket 63c of the third reduction gear portion 63. A rearwardly positioned portion of the chain 71 is trained round a sprocket 72a of a power transmission gear 72. The power transmission gear 72 comprises the sprocket 72a, a shaft portion 72b, which supports the sprocket 72a, and a sprocket 72c arranged on a left end side of the shaft portion 72b to be coaxial with the sprocket 72a.

Also, a chain 73 extended rearward toward a center of the rear wheel 11 b is trained round the sprocket 72c of the power transmission gear 72. A sprocket 74a is provided on a peripheral surface of a left portion of a wheel 74, which journals the rear wheel 11b, and a portion of the chain 73 positioned toward a rear end thereof is trained round the sprocket 74a. Therefore, a drive force, which is transmitted to the power transmission gear 72 from the third reduction gear portion 63 through the chain 71, is transmitted to the rear wheel 11 b through the chain 73 and the wheel 74 to drive the rear wheel 11 b.

A rear-wheel drive force transmission line, which rotates the rear wheel 11 b being a drive wheel, is formed by the chain 36, the first reduction gear portion 61, the second reduction gear portion 62, the third reduction gear portion 63, the chain 71, the power transmission gear 72, the chain 73, and the sprocket 74a of the wheel 74. Also, a left end side portion of the third reduction gear portion 63, the chain 71, the power transmission gear 72, the chain 73, and the wheel 74 are accommodated in an arm portion 75 and an arm portion 76 extending in the fore-and-aft direction is also provided between a right portion of a wheel 74 and the vicinity of a right portion of the third reduction gear portion 63.

A drive-wheel transmission device 70 according to the embodiment is constituted by the sprocket 63c of the third reduction gear portion 63, the chain 71, the power transmission gear 72, the chain 73, the wheel 74, and the arm portions 75, 76. The drive-wheel transmission device 70 is mounted to a rear end of a reduction-device storage casing (a rear side portion of a central storage casing 80 described later), which receives therein the reduction device 60, to be able to swing in a vertical direction.

Also, respective devices provided on the drive unit DY are assembled by means of respective casing members, fixation members such as bolts, bearing members, etc.

That is, a central storage casing 80 comprising a left side casing 81 and a right side casing 82 extends longitudinally to the third reduction gear portion 63 from a rear end of the cylinder 21. An intermediate storage casing 83 is fixed to a left side of the left side casing 81 and a left cover portion 84 is fixed to a left side of the intermediate storage casing 83. Also, an intermediate storage casing 85 is fixed to a right side of the right side casing 82 and a right cover portion 86 is fixed to a right side of the intermediate storage casing 85.

Accommodated in the central storage casing 80 are a central portion of the crank shaft 24, portions of the power distributing device 30 except a portion of the carrier shaft 31 toward the generator 40, and the reduction device 60. That is, the central storage casing 80 has its front side portion constituting a crank case, which journals the crank shaft 24, its central portion constituting a power distributing device storage casing, which accommodates therein the power distributing device 30, and its rear portion constituting a reduction-device storage casing, which accommodates therein the reduction device 60.

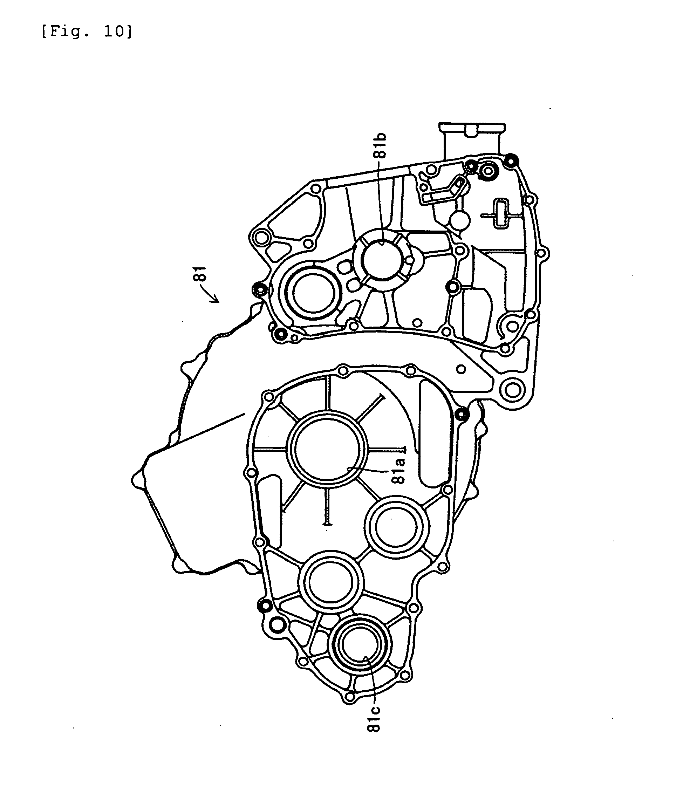

Fig. 10 shows the left side casing 81, a hole 81a is formed centrally of the left side casing 81 to permit the carrier shaft 31 to extend therethrough, and a hole 81 b is formed on a front side portion of the left side casing to permit a left end side portion of the crank shaft 24 to extend therethrough. Also, formed on a rear side portion of the left side casing 81 is a hole 81 c, which permits the shaft portion 63a of the third reduction gear portion 63 to extend therethrough and supports the shaft portion 63a rotatably with a bearing 64 (see Fig. 8) therebetween. In addition, the right side casing 82 is formed to be substantially left-right symmetric relative to the left side casing 81.

Also, the motor 50 is accommodated between the left side casing 81 of the central storage casing 80 and the intermediate storage casing 83. The left side casing 81 and the intermediate storage casing 83 are assembled together through a fixation member and a hole 83a is formed centrally of the intermediate storage casing 83 to permit the motor shaft 52 of the motor 50 to extend therethrough and to support the motor shaft 52 with a bearing 53 (see Fig. 4) therebetween. Also, a cooling water pump 54 is mounted to a front end of the intermediate storage casing 83 to supply a cooling water to respective devices provided on the drive unit DY to cool the same. A portion of the left side of the intermediate storage casing 83 except the cooling water pump 54 is covered by the left cover portion 84.

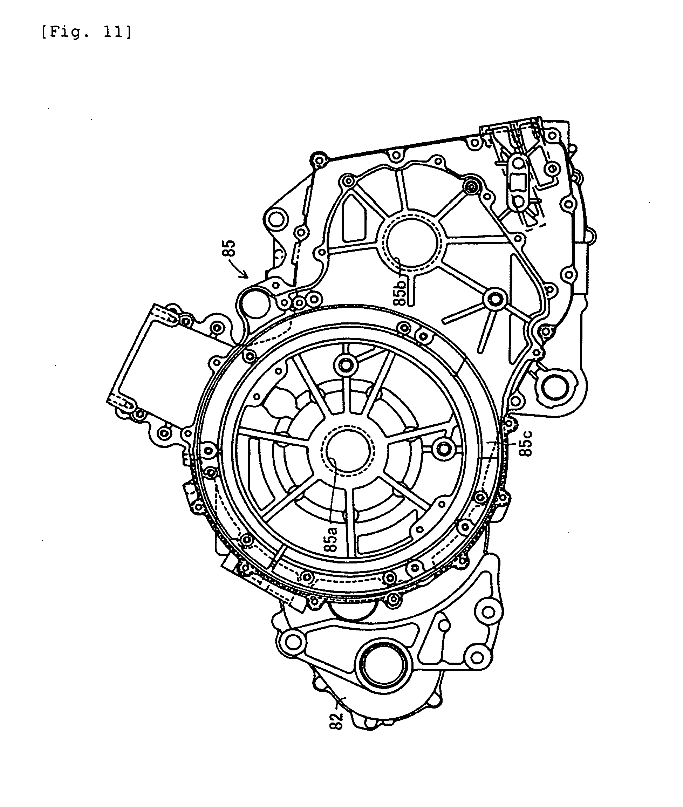

Also, the generator 40 is accommodated between the intermediate storage casing 85 and the right side casing 82. The right side casing 82 and the intermediate storage casing 85 are assembled together through a fixation member and a hole 85a is formed centrally of the intermediate storage casing 85 to permit the carrier shaft 31 to extend therethrough and to support the carrier shaft 31 with a bearing 43 therebetween (see Figs. 4 and 11). Also, a hole 85b is formed on a front side portion of the intermediate storage casing 85 to permit a right portion of the crank shaft 24 to extend therethrough and to support the crank shaft 24 with a bearing 28 (see Fig. 3) therebetween.

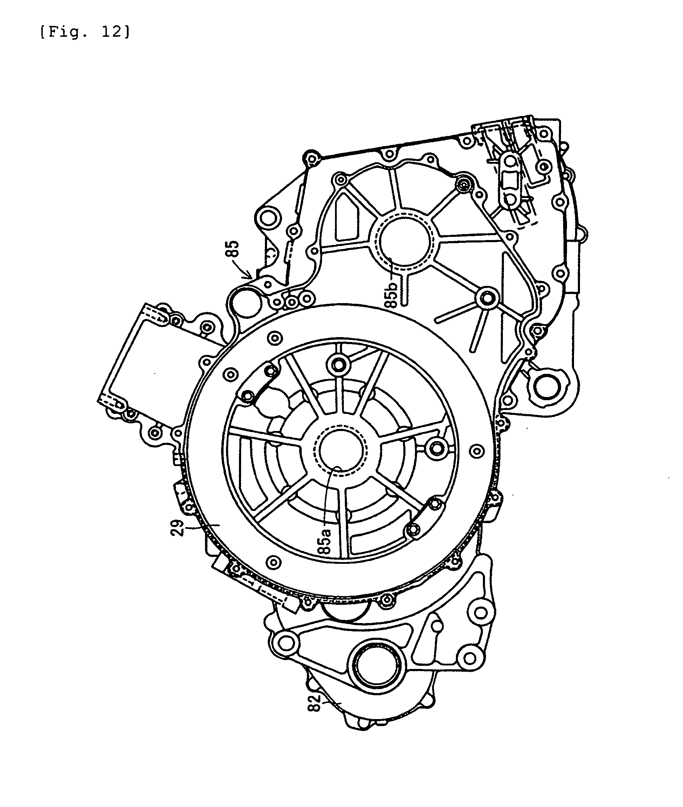

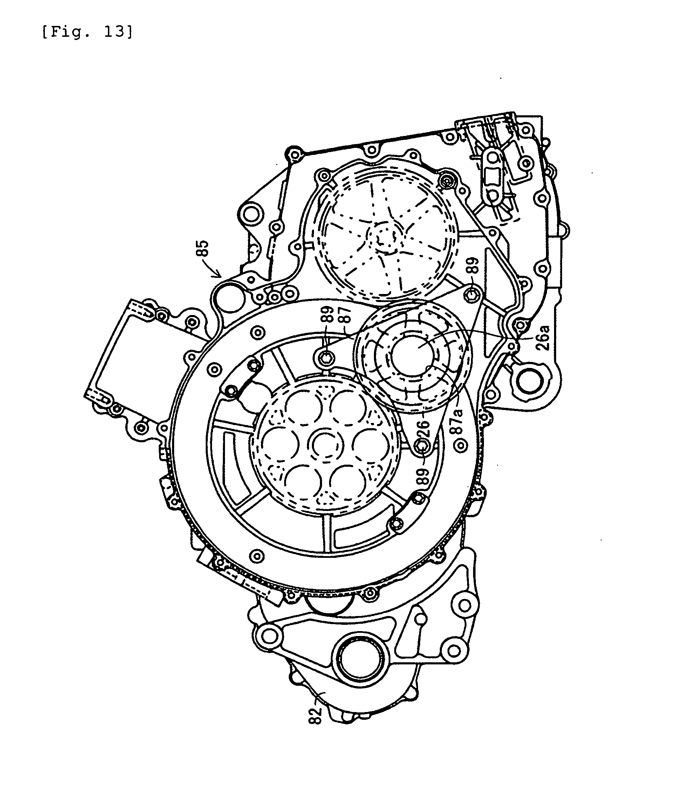

Also, an annular cooling water channel 85c is formed on an outer peripheral portion of the hole 85a on the right side of the intermediate storage casing 85 and an opened side of the cooling water channel 85c is closed by a ring-shaped closure member 29 as shown in Fig. 12. As shown in Fig. 13, the intermediate gear portion 26 is mounted to the right side of the intermediate storage casing 85 through a substantially triangular journal member 87 formed centrally thereof with a hole 87a.

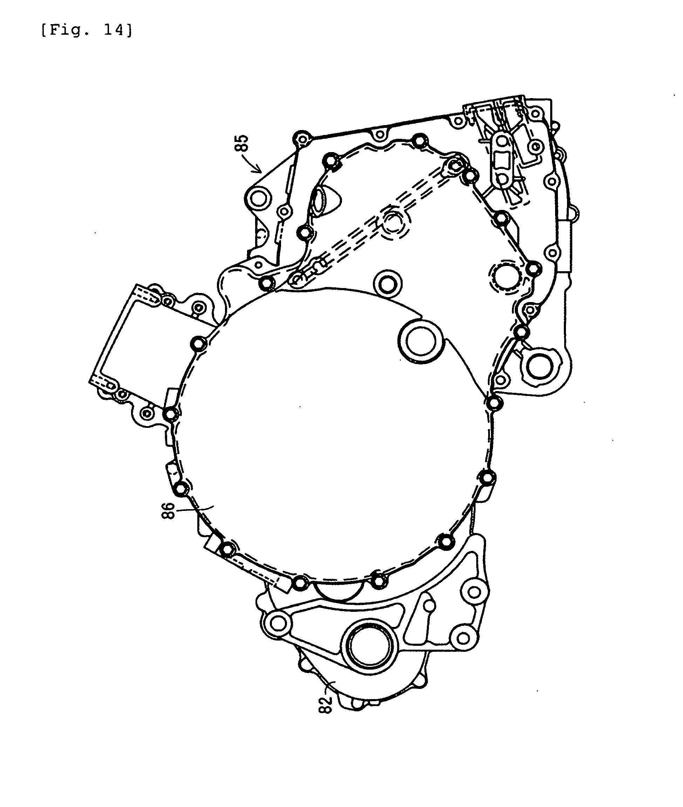

The journal member 87 comprises a pair of members with a bearing 88 (see Fig. 3) provided in the hole 87a, and interposes the intermediate gear portion 26 in a state, in which both sides of the shaft portion 26a of the intermediate gear portion 26, respectively, are inserted into the bearings 88. The journal member 87 interposing the intermediate gear portion 26 is fixed to the intermediate storage casing 85 by three bolts 89. Also, as shown in Fig. 14, a right side portion of the intermediate storage casing 85 is covered by mounting the right cover portion 86 thereto.

Also, although not shown, the hybrid motorcycle 10 comprises, in addition to the respective devices described above, respective devices required for running of the hybrid motorcycle 10, such as fuel tank, which receives a fuel, a fuel supply system, which supplies a fuel to the engine 20 from the fuel tank, a throttle valve, which adjusts a ratio of a fuel and an air fed to the engine 20, an ignition device, which ignites a fuel, a control device including CPU, ROM, RAM, a timer, etc., and a main switch, etc.

In this construction, an operation of the drive unit DY at the time of running of the hybrid motorcycle 10 is determined by a running state of the hybrid motorcycle 10 and a charged state of the battery 42. First, an operation of the drive unit DY in the case where a charged amount of the battery 42 is over a predetermined value will be described every running state of the hybrid motorcycle 10. In this case, when the hybrid motorcycle 10 starts and runs under a light load, only a drive force of the motor 50 causes the hybrid motorcycle 10 to start and run. In addition, since a charged amount of the battery 42 is over a predetermined value, the generator 40 does not generate electric power and the engine 20 is left stopped.

In this case, when the battery 42 supplies electric power to the motor 50 to rotate the motor 50, the motor shaft 52 rotates and the ring gear 35 rotates together with the motor shaft 52. After a rotating drive force of the ring gear 35 is transmitted to the reduction device 60 through the chain 36, it is further transmitted to the drive-wheel transmission device 70 to rotationally drive the rear wheel 11 b. At this time, as the ring gear 35 rotates, the planetary gears 33a, 33b, 33c, 33d rotate in the same direction as a direction, in which the ring gear 35 rotates. Further, as the planetary gears 33a, 33b, 33c, 33d rotate, the sun gear 34 rotates in a reverse direction to a direction, in which the planetary gears 33a, 33b, 33c, 33d rotate.

At this time, rotation of the rotor shaft 41 of the generator 40 is caused to synchronize with rotation of the motor shaft 52 to rotate the sun gear 34 reversely to the ring gear 35 so that cranking is not generated, in which torque is given to the crank shaft 24 of the engine 20 to reciprocate the piston 22. Thereby, it is possible to stop revolution of the planetary gears 33a, 33b, 33c, 33d and rotation of the carrier shaft 31.

Consequently, a drive force of the motor 50 is not transmitted to the crank shaft 24 and the hybrid motorcycle 10 is caused only by the drive force of the motor 50 to start and run. Also, the hybrid motorcycle 10 runs at the time of steady running with a total of a drive force of the engine 20 and a drive force of the motor 50 so as to be able to run in a region, in which the engine 20 is favorable in fuel efficiency. In this case, a drive force generated by actuation of the engine 20 is divided by the power distributing device 30 between a drive force for direct driving of the rear wheel 11 b and a drive force causing the generator 40 to generate electric power in order to obtain electric power supplied to the motor 50.

That is, when the engine 20 is actuated, a drive force of the engine 20 is transmitted to the planetary carrier 32 through the crank shaft 24 and the carrier shaft 31, so that the planetary carrier 32 rotates. As the planetary carrier 32 rotates, the planetary gears 33a, 33b, 33c, 33d revolve and rotate about the planetary pins 32b, 32c, 32d, 32e. Further, as the planetary gears 33a, 33b, 33c, 33d rotate, the ring gear 35 rotates and a rotating drive force of the ring gear 35 is transmitted to the reduction device 60 through the sprocket 37 and the chain 36.

The drive force transmitted to the reduction device 60 is transmitted to the rear wheel 11 b through the drive-wheel transmission device 70, the wheel 74, etc. to rotate the rear wheel 11 b. On the other hand, when the sun gear 34 rotates as the planetary gears 33a, 33b, 33c, 33d rotate, the rotor shaft 41 of the generator 40 rotates, so that the generator 40 generates electric power. Electric power generated by the generator 40 is used to drive the motor 50 and a drive force generated by actuation of the motor 50 is also used to drive the rear wheel 11 b.

Also, when a high output is required to cause the hybrid motorcycle 10 to accelerate or climb a slope, the engine 20 is increased in rotational frequency in addition to an operation at the time of steady running and electric power generated by the generator 40 and electric power of the battery 42 are supplied to the motor 50. Thereby, both of a drive force by the engine 20 and a drive force by the motor 50 can be increased, so that the hybrid motorcycle 10 can be caused to accelerate or climb a slope in a stable state.

Also, when the hybrid motorcycle 10 should be decelerated or braked, engine braking of the engine 20 is actuated. That is, the motor shaft 52 and the ring gear 35 are rotated by a drive force from the rear wheel 11 b and so the planetary gears 33a, 33b, 33c, 33d, the planetary carrier 32, and the sun gear 34 are going to rotate. At this time, rotation of the motor shaft 52 causes the motor 50 to generate electric power and the generated electric power is supplied to the generator 40 to increase a rotating speed of the rotor shaft 41 in a range, in which over speed is not brought about, whereby rotation of the sun gear 34 is controlled and engine braking is appropriately actuated.

Subsequently, an operation of the drive unit DY in the case where a charged amount of the battery 42 is not more than the predetermined value will be described every running state of the hybrid motorcycle 10. In this case, the battery 42 first supplies electric power to the generator 40 to cause the generator 40 to function as a sel-motor and the engine 20 is started by a drive force of the generator 40. After the engine 20 is started, supply of electric power to the generator 40 is stopped, a drive force generated by the engine 20 causes the planetary carrier 32 of the power distributing device 30 to revolve, and the sun gear 34 is rotated by rotation of the planetary gears 33a, 33b, 33c, 33d to rotate the rotor shaft 41 to cause the generator 40 to generate electric power.

At this time, electric power generated by the generator 40 is charged in the battery 42. At this time, the hybrid motorcycle 10 stops and the ring gear 35 and the motor shaft 52 are stopped in rotation. In order to stop rotation of the motor shaft 52, electric power from the battery 42 or the generator 40 is supplied to the motor 50. When the hybrid motorcycle 10 is caused to start and run under a light load, electric power generated by the generator 40 with the use of a drive force of the engine 20 charges electricity in the battery 42 while a drive force of the motor 50 causes the hybrid motorcycle 10 to start and run.

In this case, the motor 50 is driven whereby the rear wheel 11 b is rotationally driven through the ring gear 35, the chain 36, the reduction device 60, and the drive-wheel transmission device 70. At this time, as the ring gear 35 rotates, the planetary gears 33a, 33b, 33c, 33d rotate, and further as the planetary gears 33a, 33b, 33c, 33d rotate, the planetary carrier 32 rotates but the planetary carrier 32 continues in a rotating state since it rotates since the time of idling. Upon rotation of the planetary carrier 32, the sun gear 34 rotates and the generator 40 generates electric power, the electric power being charged in the battery 42.

Also, when the hybrid motorcycle 10 makes a steady running, an operation is made in the same manner as in the case where the charged amount, described above, of the battery 42 is over the predetermined value while electric power generated by the generator 40 is also used for charging of the battery 42 as well as for driving of the motor 50 until a charged amount of the battery 42 amounts to the predetermined value or more. Further, when the hybrid motorcycle 10 should be caused to accelerate or climb a slope, the same operation as that in the case where the charged amount, described above, of the battery 42 is over the predetermined value is made, in which case electric power from the battery 42 is not supplied to the motor 50 until a charged amount of the battery 42 amounts to the predetermined value or more, and acceleration is achieved by a total of a drive force of the motor 50 by a maximum electric power, which can be supplied to the motor 50 from the generator 40 at that time, and a drive force of the engine 20.

Also, when the hybrid motorcycle 10 should be decelerated or braked, a drive force from the rear wheel 11 b causes the ring gear 35 and the motor shaft 52 to rotate and a decelerating force is obtained by an action of a regenerating brake, which is provided by causing the motor 50 to generate electric power. At this time, the planetary gears 33a, 33b, 33c, 33d, the planetary carrier 32, the sun gear 34, and the rotor shaft 41 of the generator 40 rotate while electric power is supplied to the generator 40 in a range, in which the rotor shaft 41 does not reach over speed, and the rotor shaft 41 is controlled in rotating speed. Thereby, rotation of the sun gear 34 is controlled and hence engine braking can be appropriately actuated.

In this manner, with the hybrid motorcycle 10 according to the embodiment, the power distributing device 30 is positioned between the generator 40 and the motor 50 and the reduction device 60 is arranged rearwardly of the power distributing device 30. The front end of the drive-wheel transmission device 70 is jounaled by the rear end of the central storage casing 80, which receives therein the reduction device 60. Therefore, the drive-wheel transmission device 70 can be made as close to a center of a vehicle width as possible, so that it is possible to constitute the drive unit DY of the hybrid motorcycle 10 in a compact manner. Also, since the central storage casing 80, which receives therein the reduction device 60, is made use of as a member of the drive unit DY, which journals the drive-wheel transmission device 70, toward the body, any specific journal member to journal the drive-wheel transmission device 70 is made unnecessary.

Further, since the drive-wheel transmission device 70 is mounted to the central storage casing 80, both a construction, by which a drive force is transmitted to the drive-wheel transmission device 70 from the reduction device 60, and a construction, by which the drive-wheel transmission device 70 is journaled on the reduction device 60, can be made simple. Also, since the central storage casing 80 is structured to be high in stiffness and strength, it is possible to firmly journal the drive-wheel transmission device 70. Also, a portion of the hybrid motorcycle 10 in the vehicle width direction can be structured in a compact manner by adopting that planetary gear mechanism, which comprises the sun gear 34, the planetary gears 33a, 33b, 33c, 33d, the planetary carrier 32, and the ring gear 35, as the power distributing device 30, forming the rotor shaft 41 of the generator 40 and the sun gear 34 to make the same hollow, and arranging the carrier shaft 31 in the hollows.

Further, since the carrier shaft 31 is projected from the rotor shaft 41 of the generator 40 and the crank shaft 24 is connected through the intermediate gear portion 26 to the projected end of the carrier shaft 31, a construction, by which torque of the crank shaft 24 is transmitted to the carrier shaft 31, can be simplified and connection thereof is made easy. Also, since the integral, central storage casing 80 accommodates therein the crank shaft 24, the power distributing device 30, and the reduction device 60, it is possible to make the drive unit DY firm.

Also, since the single, central storage casing 80 constitutes a storage casing, which accommodates therein the crank shaft 24, the power distributing device 30, and the reduction device 60, the drive-wheel transmission device 70 can be further firmly journaled on the body side of the drive unit DY. Further, since the front end of the drive-wheel transmission device 70 is formed to be bifurcate and respective ends of the bifurcate portion are journaled by both left and right sides of the rear end of the central storage casing 80, the drive-wheel transmission device 70 can be further firmly joumaled on the body side of the drive unit DY firm. Also, the drive-wheel transmission device 70 can be mounted to the central storage casing 80 in a well-balanced manner.

Also, since the cooling water pump 54 is provided in a dead space forwardly of the motor 50 to supply a cooling water to respective devices provided on the drive unit DY to cool the same, the drive unit DY can be constituted in a compact manner. Further, since the journal member 87 comprising a pair of members is fixed to the intermediate storage casing 85 by three bolts 89, the intermediate gear portion 26 can be firmly supported without being influenced by the cooling water channel 85c.

Also, the hybrid motorcycle according to the present teaching is not limited to the embodiment described above but can be appropriately changed and embodied. For example, while the engine 20 comprises a single cylinder engine in the embodiment described above, the engine 20 can comprise not only a single cylinder but also two or more cylinders. In this case, a drive force of the crank shaft 24 can be transmitted to the carrier shaft 31 of the power distributing device 30 from portions disposed between the cylinders. Also, the carrier shaft 31 may be projected toward the motor 50 and the intermediate gear portion 26 may be arranged on a left portion of the drive unit DY to permit a drive force of the crank shaft 24 to be transmitted to the carrier shaft 31.

## Claims

1. Straddle-type vehicle having a hybrid-type drive unit, said drive unit comprising an engine (20) arranged with a crank shaft (24) directed in a vehicle width direction, a generator (40) to generate electrical power, a drive motor (50) driven by electrical power, a power distributing device (30) distributing a drive force, which is generated by the engine (20), to drive the rear wheel (11 b) through a reduction device (60), and to actuate the generator to generate electrical power,
**characterized in that**
the power distributing device (30), the generator (40), and the motor (50) are aligned on an axis rearwardly separate from and in parallel to the crank shaft (24) of the engine (20), said drive force is transmitted from the power distributing device (30) to the reduction device (60) by a chain (36) disposed in a portion between the generator (40) and the motor (50) in the vehicle width direction.

2. Straddle-type vehicle according to claim 1, **characterized in that** the power distributing device (30) is positional between the generator (40) and the motor (50).

3. Straddle-type vehicle according to claim 1 or 2, **characterized in that** the reduction device (60) is arranged rearwardly of the power distributing device (30).

4. Straddle-type vehicle according to one of the claims 1 to 3, **characterized by** a reduction device storage casing, which receives therein the reduction device (60).

5. Straddle-type vehicle according to claim 4, **characterized by** a drive-wheel transmission device (70), wherein a front end of the drive-wheel transmission device (70) is joumaled on the reduction device storage casing, so that a rear end side of the drive wheel transmission device (70) is made vertically swingable, and the drive wheel (11b) is joumaled on the rear end of the drive-wheel transmission device (70).

6. Straddle-type vehicle according to one of the claims 1 to 5, **characterized in that** the power distributing device (30) comprises a sun gear (34) connected coaxially to a rotor shaft (41) of the generator (40), a plurality of planetary gears (33a, 33b, 33c, 33d) arranged around the sun gear (34) to mesh with the sun gear (34), a planetary carrier (32), which supports the planetary gears (33a, 33b, 33c, 33d) rotatably, and a ring gear (35) arranged around the planetary gears (33a, 33b, 33c, 33d) to mesh with the planetary gears (33a, 33b, 33c, 33d) and provided rotatably about a carrier shaft (31) provided on the planetary carrier (32) to transmit torque of the carrier shaft (31) to the reduction device (60).

7. Straddle-type vehicle according to claim 6, **characterized in that** at least one of a motor shaft (52) provided on the motor (50) and the rotor shaft (41) of the generator (40) and the sun gear (34) are formed to be hollow, and the carrier shaft (31) of the planetary carrier (32) is arranged rotatably in the respectively hollow ones.

8. Straddle-type vehicle according to claim 7, **characterized in that** the carrier shaft (31) is projected from a shaft end of the motor shaft (52) or the rotor shaft (41), both of which are formed to be hollow, and rotation of the crank shaft (24) is transmitted through a drive force transmission mechanism to a projected end of the carrier shaft (31).

9. Straddle-type vehicle according to one of the claims 1 to 8, **characterized in that** a power distributing device storage casing, which receives therein the power distributing device (30), and the reduction device storage casing are formed integrally.

10. Straddle-type vehicle according to claim 9, **characterized in that** a crank case, which journals the crank shaft (24), the power distributing device storage casing, and the reduction device storage casing are formed integrally.

11. Straddle-type vehicle according to one of the claims 1 to 10, **characterized in that** the front end of the drive-wheel transmission device (70) is formed to be bifurcate and respective ends of the bifurcate portion are journaled on both left and right sides of the reduction device storage casing.

## Patentansprüche

1. Fahrzeug vom Spreizsitz- Typ mit einer Antriebseinheit vom Hybrid- Typ, wobei die Antriebseinheit eine Brennkraftmaschine (20) aufweist, angeordnet mit einer Kurbelwelle (24), gerichtet in einer Richtung der Breite des Fahrzeuges, einen Generator (40), um elektrische Energie zu erzeugen, einen Antriebsmotor (50), angetrieben durch elektrische Energie, eine Leistungsverteilungsvorrichtung (30), die eine Antriebskraft verteilt, die durch die Brennkraftmaschine (20) erzeugt wird, um das Hinterrad (11 b) durch eine Reduziervorrichtung (60) anzutreiben, und um den Generator zu betätigen, um elektrische Energie zu erzeugen,
**dadurch gekennzeichnet, dass**
die Leistungsverteilungsvorrichtung (30), der Generator (40) und der Motor (50) auf einer Achse hinter, separat von und parallel zu der Kurbelwelle (24) der Brennkraftmaschine (20) ausgerichtet sind, wobei die Antriebskraft von der Leistungsverteilungsvorrichtung (30) auf die Reduzierungsvorrichtung durch eine Kette (36), angeordnet in einem Abschnitt zwischen dem Generator (40) und dem Motor (50) in Richtung der Breite des Fahrzeuges, übertragen wird.

2. Fahrzeug vom Spreizsitz- Typ nach Anspruch 1, **dadurch gekennzeichnet, dass** die Leistungsverteilungsvorrichtung (30) zwischen dem Generator (40) und dem Motor (50) positioniert ist.

3. Fahrzeug vom Spreizsitz- Typ nach Anspruch 1, **dadurch gekennzeichnet, dass** die Reduziervorrichtung (60) hinter der Leistungsverteilungsvorrichtung (30) angeordnet ist.

4. Fahrzeug vom Spreizsitz- Typ nach einem der Ansprüche 1 bis 3, **gekennzeichnet durch** ein Reduziervorrichtungs- Unterbringungsgehäuse, das darin die Reduziervorrichtung (60) aufnimmt.

5. Fahrzeug vom Spreizsitz- Typ nach Anspruch 4, **gekennzeichnet durch** eine Antriebsrad- Übertragungsvorrichtung (70), wobei ein vorderes Ende der Antriebsrad-Übertragungsvorrichtung (70) an dem Reduziervorrichtungs- Unterbringungsgehäuse gelagert ist, so dass eine hintere Endseite der Antriebsrad- Übertragungsvorrichtung (70) vertikal schwingbar gemacht ist und das Antriebsrad (11 b) an dem hinteren Ende der Antriebsrad- Übertragungsvorrichtung (70) gelagert ist.

6. Fahrzeug vom Spreizsitz- Typ nach einem der Ansprüche 1 bis 5, **dadurch gekennzeichnet, dass** die Leistungsverteilungsvorrichtung (30) aufweist ein Sonnenrad (34), koaxial mit einer Rotorwelle (41) des Generators (40) verbunden, eine Mehrzahl von Planetenrädern (33a, 33b, 33c, 33d), angeordnet rund um das Sonnenrad (34), um mit dem Sonnenrad (34) im Kämmeingriff zu sein, einen Planetenträger (32), der die Planetenräder (33a, 33b, 33c, 33d) drehbar lagert, und ein Ringzahnrad (35), angeordnet rund um die Planetenräder (33a, 33b, 33c, 33d), um mit den Planetenrädern (33a, 33b, 33c, 33d) in Kämmeingriff zu sein und um drehbar um eine Trägerwelle (31), vorgesehen an dem Planetenträger (32), zu sein, um ein Drehmoment der Trägerwelle (31) auf die Reduziervorrichtung (60) zu übertragen.

7. Fahrzeug vom Spreizsitz- Typ nach Anspruch 6, **dadurch gekennzeichnet, dass** zumindest eines von Motorwelle (52), vorgesehen an dem Motor (50), und Rotorwelle (41) des Generators (40) und Sonnenrad (34) ausgebildet sind, hohl zu sein, und die Trägerwelle (31) des Planetenträgers (32) drehbar in dem jeweiligen hohlen Bauteil angeordnet ist.

8. Fahrzeug vom Spreizsitz- Typ nach Anspruch 7, **dadurch gekennzeichnet, dass** die Trägerwelle (31) von einem Wellenende der Motorwelle (52) oder der Rotorwelle (41) vorspringt, wobei beide von diesen hohl ausgebildet sind, und eine Drehung der Kurbelwelle (24) durch eine Antriebskraft- Übertragungsvorrichtung auf ein vorspringendes Ende der Trägerwelle (31) übertragen wird.

9. Fahrzeug vom Spreizsitz- Typ nach einem der Ansprüche 1 bis 8, **dadurch gekennzeichnet, dass** ein Leistungsverteilungsvorrichtungs- Unterbringungsgehäuse, das darin die Leistungsverteilungsvorrichtung aufnimmt, und das Reduziervorrichtungs-Unterbringungsgehäuse einstückig gebildet sind.

10. Fahrzeug vom Spreizsitz- Typ nach Anspruch 9, **dadurch gekennzeichnet, dass** ein Kurbelgehäuse, das die Kurbelwelle (24) lagert, das Leistungsverteilungsvorrichtungs- Unterbringungsgehäuse und das Reduziervorrichtungs- Unterbringungsgehäuse einstückig gebildet sind.

11. Fahrzeug vom Spreizsitz- Typ nach einem der Ansprüche 1 bis 10, **dadurch gekennzeichnet, dass** das vordere Ende der Antriebsrad- Übertragungsvorrichtung (70) gebildet ist, um gabelförmig ausgebildet zu sein, und jeweilige Enden des gabelförmigen Abschnittes sowohl auf der linken, als auch auf der rechten Seite des Reduziervorrichtungs- Unterbringungsgehäuses gelagert sind.

## Revendications

1. Véhicule de type à selle comportant une unité d'entraînement de type hybride, ladite unité d'entraînement comprenant un moteur thermique (20) pourvu d'un vilebrequin (24) dirigé dans une direction de largeur de véhicule, un générateur (40) pour générer de l'énergie électrique, un moteur d'entraînement (50) commandé par l'énergie électrique, un dispositif de distribution de puissance (30) distribuant une force d'entraînement, qui est générée par le moteur thermique (20), pour entraîner la roue arrière (11b) par l'intermédiaire d'un dispositif de réduction (60), et pour actionner le générateur pour générer de l'énergie électrique,
**caractérisé en ce que**
le dispositif de distribution de puissance (30), le générateur (40) et le moteur (50) sont alignés sur un axe séparé vers l'arrière du vilebrequin (24) du moteur thermique (20) et parallèle à celui-ci, ladite force d'entraînement est transmise du dispositif de distribution de puissance (30) au dispositif de réduction (60) par une chaîne (36) disposée dans une partie entre le générateur (40) et le moteur (50) dans la direction de largeur de véhicule.

2. Véhicule de type à selle selon la revendication 1, **caractérisé en ce que** le dispositif de distribution de puissance (30) est positionné entre le générateur (40) et le moteur (50).

3. Véhicule de type à selle selon la revendication 1 ou 2, **caractérisé en ce que** le dispositif de réduction (60) est agencé à l'arrière du dispositif de distribution de puissance (30).

4. Véhicule de type à selle selon l'une des revendications 1 à 3, **caractérisé par** un carter de logement de dispositif de réduction, qui reçoit le dispositif de réduction (60) dans celui-ci.

5. Véhicule de type à selle selon la revendication 4, **caractérisé par** un dispositif de transmission de roue motrice (70), dans lequel une extrémité avant du dispositif de transmission de roue motrice (70) est supportée sur le carter de logement de dispositif de réduction, de sorte qu'un côté d'extrémité arrière du dispositif de transmission de roue motrice (70) peut pivoter verticalement, et la roue d'entraînement (11b) est supportée sur l'extrémité arrière du dispositif de transmission de roue motrice (70).

6. véhicule de type à selle selon l'une des revendications 1 à 5, **caractérisé en ce que** le dispositif de distribution de puissance (30) comprend un planétaire (34) relié coaxialement à un arbre de rotor (41) du générateur (40), une pluralité d'engrenages satellites (33a, 33b, 33c, 33d) agencés autour du planétaire (34) pour engrener avec le planétaire (34), un porte-satellites (32), qui supporte les engrenages satellites (33a, 33b, 33c, 33d) en rotation, et une couronne dentée (35) agencée autour des engrenages satellites (33a, 33b, 33c, 33d) pour engrener avec les engrenages satellites (33a, 33b, 33c, 33d) et prévue en rotation autour d'un arbre de support (31) prévu sur le porte-satellites (32) pour transmettre un couple de l'arbre de support (31) au dispositif de réduction (60).

7. Véhicule de type à selle selon la revendication 6, **caractérisé en ce qu'**au moins l'un d'un arbre de moteur (52) prévu sur le moteur (50) et de l'arbre de rotor (41) du générateur (40) et du planétaire (34) est formé de manière à être creux, et l'arbre de support (31) du porte-satellites (32) est agencé en rotation dans les éléments creux respectifs.

8. Véhicule de type à selle selon la revendication 7, **caractérisé en ce que** l'arbre de support (31) fait saillie d'une extrémité d'arbre de l'arbre de moteur (52) ou de l'arbre de rotor (41), les deux étant formés de manière à être creux, et la rotation du vilebrequin (24) est transmise par l'intermédiaire d'un mécanisme de transmission de force d'entraînement à une extrémité saillante de l'arbre de support (31).

9. Véhicule de type à selle selon l'une des revendications 1 à 8, **caractérisé en ce qu'**un carter de logement de dispositif de distribution de puissance, qui reçoit le dispositif de distribution de puissance (30) dans celui-ci, et le carter de logement de dispositif de réduction sont formés d'un seul tenant.

10. Véhicule de type à selle selon la revendication 9, **caractérisé en ce qu'**un carter moteur, qui supporte le vilebrequin (24), le carter de logement de dispositif de distribution de puissance et le carter de logement de dispositif de réduction sont formés d'un seul tenant.

11. Véhicule de type à selle selon l'une des revendications 1 à 10, **caractérisé en ce que** l'extrémité avant du dispositif de transmission de roue motrice (70) est formée de manière à se diviser en deux parties et les extrémités respectives de la partie divisée sont supportées sur les deux côtés gauche et droit du carter de logement de dispositif de réduction.
